Europäisches Patentamt

European Patent Office

Office européen des brevets

(11) Numéro de publication: **0 190 059**
**A1**

(12) **DEMANDE DE BREVET EUROPEEN**

(21) Numéro de dépôt: **86400016.1**

(22) Date de dépôt: **07.01.86**

(51) Int. Cl.⁴: **G 01 M 3/32**

(30) Priorité: **11.01.85 FR 8500404**

(43) Date de publication de la demande:
**06.08.86 Bulletin 86/32**

(84) Etats contractants désignés:
**BE DE GB IT NL**

(71) Demandeur: **NOVATOME**
**La Boursidière R.N. 186**
**F-92357 Le Plessis Robinson(FR)**

(72) Inventeur: **Lebaud, Patrice**
**60 rue Marie Fichet**
**F-92140 Clamart(FR)**

(72) Inventeur: **Forestier, Frédéric**
**66-70 rue Moxouris**
**F-78150 Le Chesnay(FR)**

(74) Mandataire: **Polus, Camille et al,**
**c/o Cabinet Lavoix 2, Place d'Estienne d'Orves**
**F-75441 Paris Cedex 09(FR)**

(54) Procédé de détection de fuites moyennes ou importantes à travers la paroi d'échange d'un générateur de vapeur utilisant du métal liquide.

(57) Le procèdé consiste à mesurer le niveau du metal liquide apportant la chaleur de vaporisation. On compare la valeur mesurée ou son évolution dans le temps à une autre valeur du niveau ou à son évolution en fonction du temps, déterminées dans des conditions différentes. On mesure par exemple les niveaux (30, 32) du sodium grâce à des sondes (35, 36). Les valeurs mesurées sont comparées entre elles ou a de valeurs de référence. On peut également effectuer des mesures de niveau en un point du circuit d'alimentation du générateur de vapeur en métal liquide.

FIG.1

1

L'invention concerne un procédé de détection de fuites moyennes ou importantes à travers la paroi d'échange d'un générateur de vapeur dans lequel la chaleur de vaporisation est apportée par un métal liquide.

Les générateurs de vapeur des centrales nucléaires à neutrons rapides comportent généralement un faisceau de tubes à l'intérieur desquels on fait circuler l'eau à vaporiser, la surface extérieure des tubes du faisceau étant en contact avec un métal liquide a haute température tel que du sodium apportant la chaleur de vaporisation a l'eau. L'eau et sa vapeur sont à une pression elevée, de l'ordre de 18 MPa, alors que le sodium est à une pression faible, de l'ordre de 0,3 MPa. Si une fuite se produit à travers la paroi d'un des tubes d'échange, l'eau ou sa vapeur pénètre dans le sodium. Il s'ensuit une réaction violente très exothermique qui dégage de l'hydrogène. Il peut en résulter des dégats importants.

Il est donc fortement souhaitable de détecter rapidement toute fuite pouvant apparaître a la suite d'une fissuration ou d'une rupture d'un tube d'échange. On peut en effet intervenir rapidement et réduire les conséquences de la fuite. On utilise par exemple, pour détecter de telles fuites, des dispositifs permettant de déceler de très faibles traces d'hydrogène dans le sodium. Cependant, le temps de détection est relativement long et la méthode n'est applicable que dans le cas de fuites faibles ou très faibles, par exemple de l'ordre de quelques grammes par seconde. Dans le cas de fuites moyennes ou importantes, par exemple de l'ordre de plusieurs centaines de grammes par seconde ou plus importantes encore, la détection d'hydrogène n'est plus applicable comme procédé de surveillance d'un générateur de vapeur sodium-eau. L'évolution de la réaction entre le sodium et l'eau et l'apparition de phénomènes dangereux sont alors trop rapides par rapport à la vitesse de détection.

La détection d'une fuite importante par méthode acoustique est possible mais nécessite un appareillage complexe pour l'exploitation des signaux reçus par les détecteurs et en particulier pour la discrimination des signaux correspondant effectivement à l'apparition d'une fuite.

La détection de fuite par mesure de température ou de débit de sodium a également été proposée. En effet, la réaction sodium-eau consécutive à une fuite produit une modification de la température du sodium et les produits de réaction modifient son débit. Cependant, cette méthode nécessite l'utilisation de capteurs de température ou de débit relativement nombreux et situés dans des zones différentes du générateur de vapeur.

Le but de l'invention est donc de proposer un procédé de détection de fuites moyennes ou importantes à travers la paroi d'échange d'un générateur de vapeur dans lequel la chaleur de vaporisation est apportée par un métal liquide qui présente au moins un niveau libre dans au moins une partie du générateur de vapeur, procédé permettant une détection rapide et sûre avec un appareillage relativement simple.

Dans ce but, on mesure en continu le niveau du métal liquide, dans au moins une zone définie à l'intérieur du générateur de vapeur ou de son circuit d'alimentation en métal liquide et on compare à chaque instant la valeur mesurée de ce niveau ou la variation dans le temps de cette valeur avec au moins une autre valeur de ce niveau ou sa variation dans le temps, déterminées dans des conditions différentes et on en déduit la présence d'une fuite dans le cas d'un écart significatif entre les valeurs ou variations du niveau déterminées dans des conditions différentes.

Afin de bien faire comprendre l'invention, on va maintenant décrire, à titre d'exemples non limitatifs, en se référant aux figures jointes en annexe, plusieurs modes de mise en oeuvre du procédé suivant l'invention, dans le cas d'un générateur de vapeur sodium-eau d'une centrale nucléaire à neutrons rapides.

Dans ces figures :

- la Fig. 1 est une vue en coupe par un plan vertical d'un générateur de vapeur à tubes hélicoïdaux comportant des moyens de mesure de niveau et de température du sodium liquide.

- la Fig. 2 est une vue schématique de la cuve et du circuit secondaire d'un réacteur nucléaire à neutrons rapides.

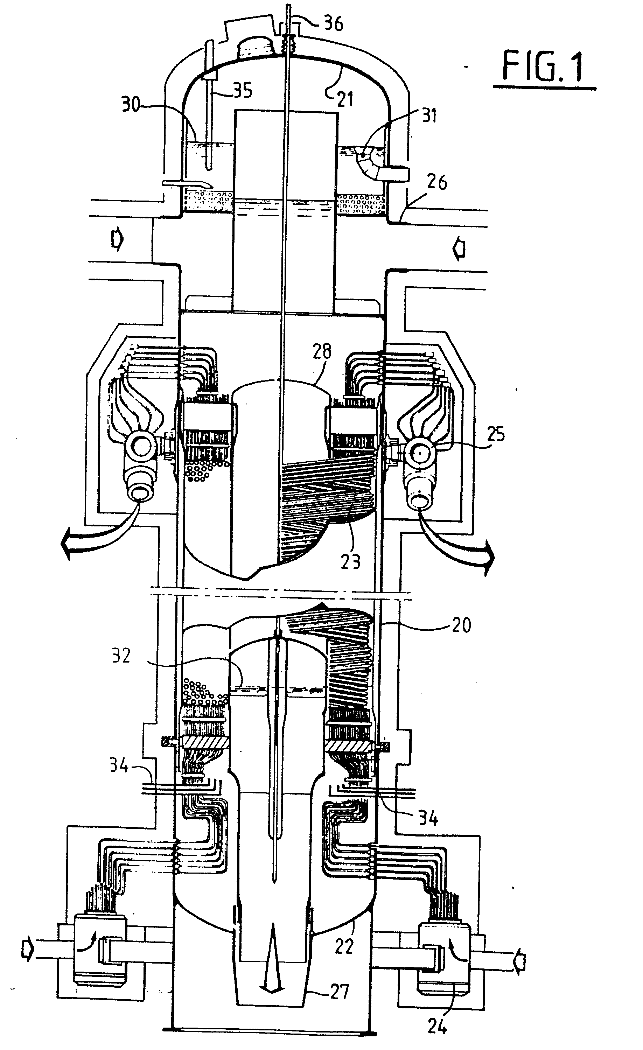

Sur la Fig. 1, on voit un générateur de vapeur comportant une enveloppe cylindrique verticale 20 qui présente un fond bombé supérieur 21 et un fond bombé inférieur 22 et renferme un faisceau de tubes hélicoïdaux 23. Chacun des tubes 23 est relié à l'une de ses extrémités à une boite a eau 24 et à son autre extrémité à un collecteur de vapeur 25. Le sodium entre dans l'enveloppe 20 du générateur de vapeur par des tubulures 26. Le sodium s'écoule dans la direction axiale, de haut en bas en contact avec le faisceau 23 pour ressortir en partie inférieure du générateur de vapeur par une tubulure 27 traversant le fond 22. Un corps central creux 28 occupe la partie centrale de l'enveloppe 20 dans la zone du faisceau 23 disposé

4

dans l'espace annulaire autour du corps creux 28.

Le niveau supérieur du sodium 30 s'établit en fonctionnement normal du générateur de vapeur, au-dessus des tubulures d'arrivée 26, en fonction des conditions d'alimentation et d'écoulement du sodium à l'intérieur du générateur de vapeur. Un trop plein 31 permet de limiter les remontées du sodium dans la partie supérieure du générateur de vapeur.

Le sodium liquide pénètre, après sa traversée du faisceau 23, dans le corps central 28 où s'établit un niveau libre interne 32 grâce à une alimentation en gaz inerte tel que de l'argon de la partie supérieure du corps central 28.

La présence de plusieurs niveaux libres à l'intérieur du générateur de vapeur permet d'absorber plus facilement les ondes de pression pouvant résulter de la réaction sodium-eau dans le cas d'une fuite sur l'un des tubes du faisceau 23.

Le générateur de vapeur représenté à la Fig. 1 qui est d'un type classique à faisceaux de tubes hélicoïdaux a été équipé de différents dispositifs de mesure permettant la mise en oeuvre du procédé de détection de fuite suivant l'invention.

Ce générateur de vapeur est ainsi équipé d'une sonde de niveau 35 permettant de déterminer la position du niveau 30 et ses variations ainsi que d'une sonde de niveau interne 36 permettant de déterminer la position du niveau 32 et ses variations.

Les mesures réalisées par les sondes 35 et 36 et leur enregistrement pendant le fonctionnement du réacteur permettent une détection de fuite par le procédé selon l'invention.

La mise en oeuvre de l'invention peut cependant être faite de plusieurs façons.

5

Un premier mode de realisation consiste à comparer en permanence le niveau mesure par la sonde 35 avec un niveau de reference prédétermine correspondant au niveau maximal du sodium dans le générateur de vapeur en fonctionnement normal ou à un niveau un peu supérieur à ce niveau maximal. Dans le cas de l'apparition d'une fuite, l'onde de choc engendrée par la formation d'hydrogene entraine en effet une élévation très rapide et très forte du niveau de sodium au-dessus du niveau maximal en fonctionnement normal. Une alarme est donc declenchée en cas de dépassement du niveau de référence.

Un second mode de réalisation du procédé de détection suivant l'invention consiste a analyser la vitesse d'évolution du niveau libre 30, pendant le fonctionnement du réacteur, et de la comparer à une valeur définie correspondant à la valeur de la vitesse d'évolution maximale de ce niveau, pendant le fonctionnement normal du générateur de vapeur. Comme précédemment, en cas de dépassement de la vitesse de référence, on en déduit la presence d'une fuite. En variante, on peut déterminer la dérivee de la vitesse de variation du niveau libre 30 au cours du temps et comparer cette dérivée à une valeur de référence.

Un troisième mode de réalisation du procédé de détection suivant l'invention consiste à mesurer la différence entre les niveaux 30 et 32 à l'aide des indications fournies par les sondes 35 et 36.

Dans le cas d'un fonctionnement normal du générateur de vapeur, ces deux niveaux évoluent sensiblement de la même façon alors que dans le cas de l'apparition d'une fuite, ces deux niveau évoluent d'une façon très différente. En cas de fuite, on va donc observer une variation très rapide et très impor-

6

tante de la différence entre les niveaux 30 et 32.

On peut, pour la mise en oeuvre du procédé, comparer soit la différence de niveaux elle-même, soit sa vitesse de variation, avec une valeur prédéterminée de la différence de niveaux ou de sa vitesse d'évolution respectivement.

Dans le cas d'un générateur de vapeur dont le débit de sodium est de 3270 Kg par seconde, on observe une elévation du niveau supérieur 30 du sodium de 0,13 mètre, en cinq secondes, pour une fuite de 0,1Kg par seconde. Dans le cas d'une fuite de 0,5 Kg par seconde, l'élévation correspondante du niveau 30 est de 0,75 mètre en deux secondes. On voit donc que l'élévation de niveau est très sensible à l'importance de la fuite et que la méthode de détection utilisant les niveaux de sodium liquide est extrèmement sensible.

Dans le cas ou l'on utilise la vitesse de variation d'un niveau libre de sodium comme parametre de détection, on peut soit comparer cette vitesse à une valeur prédéterminée correspondant à une limite de fonctionnement normal du générateur de vapeur, soit analyser la variation de la vitesse et calculer sa dérivée. Si cette dérivée correspondant à l'accélération du niveau de sodium dépasse une certaine valeur, on en déduit la présence d'une fuite.

Au lieu de sondes de mesure de type continu donnant à chaque instant une mesure représentative du niveau instantané, on peut utiliser des sondes de type discontinu fournissant un signal lorsque ce niveau dépasse une certaine valeur. On peut egalement utiliser des sondes de type discontinu présentant plusieurs seuils de déclenchement d'un signal.

7

Le générateur de vapeur représenté a la Fig. 1 est du type comportant huit secteurs séparés par des cloisons radiales ; il est équipé, en partie basse, de thermocouples 34 placés en sortie de chacun des secteurs canalisant le sodium liquide et constituant un système complémentaire de détection de fuite destiné à accroitre la sûreté de détection. On a disposé trois thermocouples 34 dans chacun des huit secteurs pour augmenter la fiabilité du système complémentaire de détection de fuite.

Dans un générateur de vapeur tel que représenté à la Fig. 1, le débit de sodium est de 3270 Kg par seconde pour l'ensemble des huit secteurs.

Pour chacun des secteurs, une discrimination des signaux de mesure obtenus par les trois thermocouples permet d'obtenir un signal unique représentant la température mesurée dans le secteur considéré.

Les huit signaux obtenus sont comparés entre eux à tout instant pendant le fonctionnement du générateur de vapeur et dans le cas de l'apparition d'une fuite dans un secteur se traduisant par une élévation de température, l'évolution du signal de température correspondant permet la détection de la fuite, venant confirmer l'indication du système de mesure et de surveillance de niveaux.

Une fuite d'eau ou de vapeur de 1 Kg par seconde se traduit par une élévation de température de 20°C en sortie du secteur correspondant, par rapport à la sortie des autres secteurs. Le temps de détection de cette fuite est inférieur à 10 secondes.

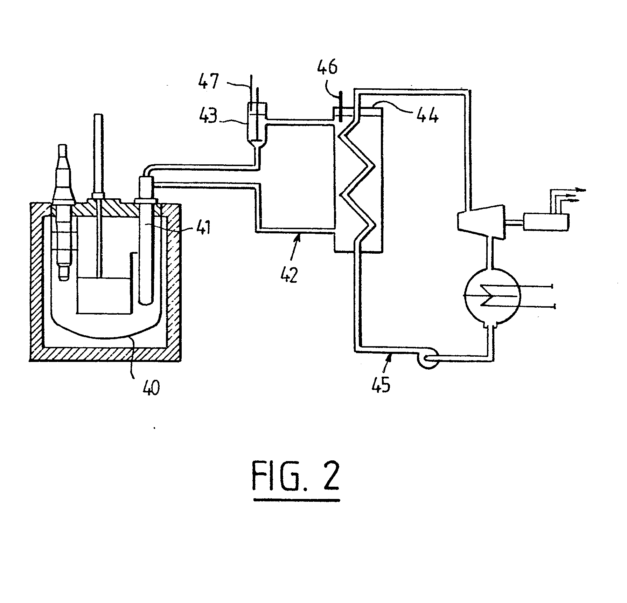

Sur la Fig. 2, on voit la cuve principale 40 d'un réacteur nucléaire a neutrons rapides remplie de sodium liquide primaire dans laquelle plonge des échangeurs intermédiaires tels que 41 assurant les

8

échanges de température entre le sodium primaire remplissant la cuve et du sodium secondaire circulant dans un circuit 42 appelé circuit secondaire. Ce circuit 42 comporte en particulier une pompe secondaire 43 et un générateur de vapeur 44 qui peut être du type tel que représenté sur la Fig. 1. Un circuit d'eau et de vapeur 45 est relié au faisceau du générateur de vapeur 44.

Le sodium liquide s'établit à un certain niveau dans la pompe 43 et dans le générateur de vapeur 44. Pour la mise en oeuvre du procédé de détection de fuite suivant l'invention, on a disposé une sonde de niveau 46, analogue à la sonde 35 représentée sur la Fig. 1, pour la détection du niveau supérieur du sodium liquide dans le générateur de vapeur 44 et une sonde de niveau 47 pour la détection du niveau dans la pompe 43.

Les indications des sondes 46 et 47 sont utilisées de la même façon que les indications des sondes 35 et 36 pour la détection de fuite. En particulier, on utilisera soit la valeur de la différence de niveau mesurée par les sondes 47 et 46, soit la variation de cette différence de niveau comme paramètre de détection de fuite.

On pourra comparer directement les variations des niveaux dans la pompe et dans le générateur de vapeur pour en déduire la présence d'une fuite en cas d'écart significatif.

On pourra également analyser la vitesse de variation de la différence de niveau dans la pompe 43 et dans le générateur de vapeur 44 et calculer la vitesse de cette variation et sa dérivée.

Les principaux avantages du procédé suivant l'invention sont de permettre une détection rapide

0190059

9

très sûre et très sensible de l'apparition d'une fuite, en effectuant des mesures et des comparaisons extrêmement faciles à réaliser et mettant en oeuvre des dispositifs d'une grande simplicité.

Le procédé ne se limite pas aux modes de réalisation qui ont été décrits.

C'est ainsi qu'on peut utiliser non seulement des mesures séparées de niveau ou de température mais encore utiliser ces mesures de façon simultanée et combinée pour détecter, de façon encore plus sûre, l'apparition d'une fuite.

On peut également utiliser d'autres paramètres physiques du métal liquide comme paramètres complémentaires de détection de fuite. On peut par exemple utiliser des mesures de pression, de vitesse ou de débit.

Enfin, le procédé suivant l'invention s'applique pour la détection de toute fuite moyenne ou importante dans un générateur de vapeur du type métal liquide-eau.

10

## REVENDICATIONS

1.- Procédé de détection de fuites moyennes ou importantes à travers la paroi d'échange d'un générateur de vapeur dans lequel la chaleur de vaporisation est apportée par un métal liquide qui présente au moins un niveau libre (30, 32) dans au moins une partie du générateur de vapeur, caractérisé par le fait qu'on mesure le niveau du métal liquide, dans au moins une zone définie à l'intérieur du générateur de vapeur (20) ou de son circuit d'alimentation (42) en métal liquide et qu'on compare, à chaque instant, la valeur mesurée de ce niveau ou la variation dans le temps de cette valeur avec au moins une autre valeur de ce niveau ou sa variation dans le temps, déterminées dans des conditions différentes et qu'on en déduit la présence d'une fuite dans le cas d'un écart significatif entre les valeurs ou variations du niveau déterminées dans des conditions différentes.

2.- Procédé de détection suivant la revendication 1, caractérisé par le fait que le niveau mesuré est le niveau de métal liquide (30) dans la partie supérieure du générateur de vapeur.

3.- Procédé de détection de fuites suivant la revendication 2, caractérisé par le fait que le niveau supérieur (30) du sodium liquide est comparé à une valeur de référence.

4.- Procédé de détection suivant la revendication 2, caractérisé par le fait qu'on compare la vitesse de variation du niveau supérieur (30) du métal liquide dans le générateur de vapeur a la vitesse de variation de ce niveau supérieur (30), dans le cas du fonctionnement normal du générateur de vapeur.

5.- Procédé de détection de fuites suivant la revendication 1, caractérisé par le fait qu'on calcule la dérivée de la vitesse de variation du niveau au cours du temps et qu'on compare cette dérivée à une valeur de référence.

6.- Procédé de détection de fuites suivant la revendication 1, caractérisé par le fait qu'on mesure le niveau de métal liquide (30, 32) à deux endroits différents dans le générateur de vapeur.

7.- Procédé de détection de fuites suivant la revendication 6, caractérisé par le fait qu'on compare la différence des deux niveaux (30, 32) à une valeur de référence.

8.- Procédé de détection de fuites suivant la revendication 6, caractérisé par le fait qu'on calcule la vitesse de variation de la différence des deux niveaux (30, 32) et qu'on compare cette vitesse à une valeur de référence.

9.- Procédé de détection de fuites suivant la revendication 1, caractérisé par le fait qu'on mesure le niveau du métal liquide dans le générateur de vapeur (44) et dans une zone (43) du circuit (42) d'alimentation en métal liquide de ce générateur de vapeur et qu'on compare les deux niveaux mesurés.

10.- Procédé de détection de fuites suivant la revendication 1, caractérisé par le fait que, pour accroître la sûreté de la détection, on mesure, en plus du niveau du métal liquide, sa température et qu'on compare des valeurs de la température du métal liquide à des valeurs obtenues dans des conditions différentes.

11.- Procédé de détection de fuites suivant la revendication 1, caractérisé par le fait que les mesures de niveaux sont effectuées avec un dispositif de mesure continu (35, 36).

12

12.- Procédé de détection de fuites suivant la revendication 1, caractérisé par le fait que les mesures de niveaux sont obtenues avec un dispositif de type discontinu fournissant un signal dans le cas de dépassement d'un certain seuil.

13.- Procédé de détection de fuites suivant la revendication 1, caractérisé par le fait que les mesures de niveaux sont effectuées avec au moins un dispositif de type discontinu fournissant un signal en cas de dépassement de l'un quelconque de plusieurs seuils.

0190059

1 / 2

FIG.1

FIG. 2

Office européen
des brevets

**RAPPORT DE RECHERCHE EUROPEENNE**

**0190059**
Numero de la demande

EP  86 40 0016

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | FR-A-1 474 590 (ALLMÄNNA SVENSKA ELETRISKA) * Figure 1; la description en entier * | 1,11 | G 01 M 3/32 |
| A | US-A-3 416 500 (D.E.A. LYONS) * Abrégé; figure 1; colonne 2, lignes 1-12; colonne 4, lignes 23-53 * | 1,4 | |

---

**DOMAINES TECHNIQUES RECHERCHES (Int. Cl.4)**

G 01 M 3
F 22 B 1

Le présent rapport de recherche a été établi pour toutes les revendications

| Lieu de la recherche | Date d'achèvement de la recherche | Examinateur |
|---|---|---|
| LA HAYE | 07-04-1986 | DEANE J.H.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82